Europäisches Patentamt

European Patent Office

Office européen des brevets

(19)

(11) Publication number: **0 154 634**
**B1**

(12) **EUROPEAN PATENT SPECIFICATION**

(45) Date of publication of patent specification: **11.05.88**

(51) Int. Cl.⁴: **E 03 B 3/00, E 03 B 3/36**

(21) Application number: **84903059.8**

(22) Date of filing: **23.08.84**

(86) International application number:
**PCT/DK84/00078**

(87) International publication number:
**WO 85/01076 14.03.85 Gazette 85/07**

(54) **WATER INLET INCLUDING A RACK OR FRAME WITH DRAIN PIPES.**

(30) Priority: **26.08.83 DK 3901/83**

(43) Date of publication of application:
**18.09.85 Bulletin 85/38**

(45) Publication of the grant of the patent:
**11.05.88 Bulletin 88/19**

(84) Designated Contracting States:
**DE FR GB NL SE**

(56) References cited:
**GB-A- 966 167**
**GB-A-1 519 821**

**Derwent's abstract No. 27 036 K/11, SU 926
184, POLYMER MATER WATER**

(73) Proprietor: **SONDRUP, Erik**
**Fynsgade 20**
**DK-9850 Hirtshals (DK)**

(72) Inventor: **SONDRUP, Erik**
**Fynsgade 20**
**DK-9850 Hirtshals (DK)**

(74) Representative: **Wotherspoon, Graham et al**
**FITZPATRICKS 4 West Regent Street**
**Glasgow G2 1RS Scotland (GB)**

Courier Press, Leamington Spa, England.

## Description

This present invention concerns a water filtration inlet, especially for use when taking in water for hydroculture, the inlet consisting of a rack or frame fitted with permeable drain piping.

In various plants or processing systems sea, lake or river water is being used, taken through a pipe or open channel to the place of use, or to an intermediate well, from which it is pumped on elsewhere. For many purposes it is desirable to avoid the water being polluted with weeds, particles, or oil, e.g. in connection with the catchment of waqter for hydroculture, or for demineralization plants where sea water is being turned into fresh water. It is a known technique to achieve effecient filtration in such plants by letting the catchment take place through a system of long drain pipes buried into the sea bed or lake bottom, in which fashion the surrounding layers of sand or earth will act as the filtrating element. For that purpose, drain pipes made of long plastic tubes are used, around the perforations of which — in order to prevent clogging — a concentric ring of gravel particles has been glued. This filtration method has various disadvantages, especially when used on the open coast. In areas with strong currents sand may be dislodged, the drain pipes will be exposed, and will be torn or ripped apart. In other circumstances considerable sediments of sand on top of the pipes have been seen, which will also lead to destruction of the inlet, or reduced capacity, making necessary the move of the inlet system, or the establishment of an entirely new one. The establishment and the maintenance of a widespred sea-based drain system is both difficult and costly, and repairs to or moving the pipe system may cause unacceptably long stoppages, e.g. where an hydroculture is concerned. An alternative system disclosed in GB—A—1,519,821 concerns a method using a filtration unit, having a perforated plate, which is buried in sand. The purpose of this present invention is to specify embodiments of a Water Filtration Inlet, where the above-mentioned problems of long, buried drain pipes are avoided.

The water filtration inlet according to the invention is characterized in that one or several of drain pipes of limited length are fitted inside a frame with transport loops, and in that the drain pipes are closed at one end and open at the other end which latter end is connected to a header box, from which there is a water outlet for the filtered water. The frame is provided with loops to make crane transport possible without damage to the element.

The water filtration inlet is to be dug into the sea bed and covered with sand, and the header outlet is connected to the conduit pipe leading to intermediate well or the place of use on land, whereafter a supply of filtered water will be established.

The consequence of having the drain pipes together in an inlet frame makes for simple, quick and cheap installation. As the drain pipes lie protected inside a frame of limited dimensions they are not, like the long drain pipes, exposed to damage from currents and surf. Furthermore it will be possible to move the water filtration inlet quickly and cheaply, without damage to the pipes, in case it is necessary because of excessive sanding up or similar.

The drawing attached shows.

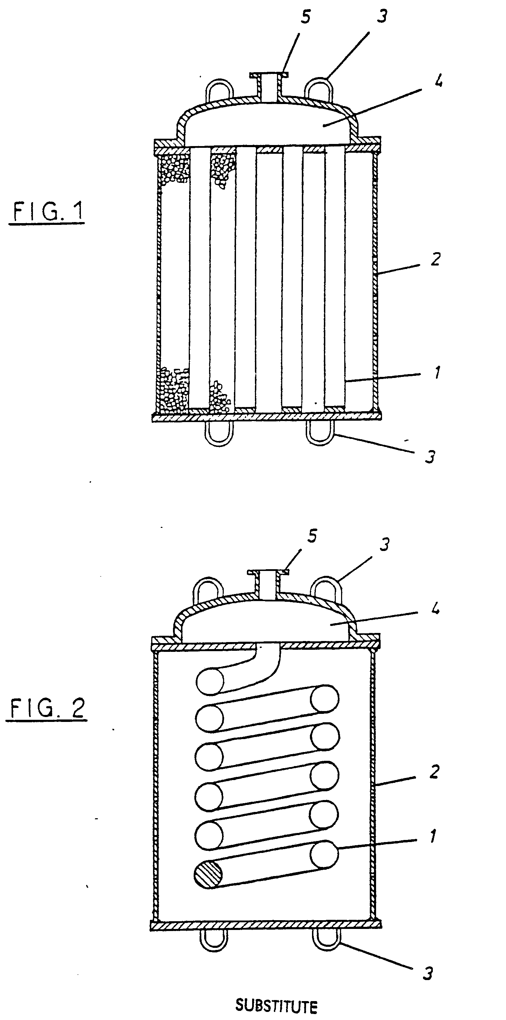

Fig. 1 a section of one embodiment of a water filtration inlet, and

Fig. 2 a section of another embodiment of a water filtration inlet.

The water filtration inlet consists of drain pipes 1, fitted inside a portable frame 2. The drain pipes which are closed at one end, are at the open end connected to a header box 4, from which there is an outlet 5. The water filtration inlet is provided with loops 3 for use when handling the inlet with a crane.

Another embodiment of a water filtration inlet is one where a long drain pipe is rolled up to form a helix, fitted inside a portable frame. The pipe is closed at one end, the other via an outlet connected to the conduit pipe. A third embodiment of the water filtration inlet consists of a design where several drain pipes are rolled up in helices of different diameters, fitted concentrically one inside the other inside the frame. Further, other embodiments may consist of having a frame fitted with both straight and helical drain pipes. For all the embodiments described it goes that there is nothing to prevent them from having the sides of the frame delimited by a perforated sheet or plate, or from filling the room between the drain pipes and the sides with permeable material, e.g. gravel.

In the event where greater capacity would be needed than the capacity offered by a single element, the outlets of several elements may be coupled to the same water inlet pipe.

## Claims

1. Water filtration inlet especially for when taking in water for hydroculture, and consisting of a rack or frame fitted with permeable drain piping, characterized in that one or several drain pipes (1) of limited length are fitted inside a frame (2) with transport loops (3), and in that the drain pipes are closed at one end, and open at the other end, which latter end is connected to a header box (4) from which there is a water outlet (5) for the filtered water.

2. Water filtration inlet according to claim 1, characterized in that the frame (2) contains several straight and parallel drain pipes (1).

3. Water filtration inlet according to claim 1, characterized in that the frame (2) contains a single drain pipe (1) rolled-up in a helix.

4. Water filtration inlet according to claim 1, characterized in that the frame (2) contains one or several drain pipes (1) rolled up in helices of different diameters and fitted concentrically one inside the other.

5. Water filtration inlet according to claim 1, characterized in that the frame (2) contains one or several parallel drain pipes (1) around wich there are fitted one or several helical drain pipes (1).

6. Water filtration inlet according to claim 1, characterized in that the sides of the frame (2) are delimited by a perforated sheet or plate, and that the room between the sides of the frame (2) is filled with permeable material, e.g. gravel.

## Patentansprüche

1. Wasser-Filtereinlass insbesondere für den Gebrauch beim Einziehen von Wasser für die Aquakultur, bestehend aus einem Gerüst oder Rahmen, der mit duchlässigen Dränagerohren versehen ist, dadurch gekennzeichnet, dass eines oder mehrere Dränagerohre (1) begrenzter Länge innerhalb eines Rahmens (2) mit Transportaugen (3) angebracht sind, und dass die Dränagerohre an einem Ende gschlosssen und am anderen Ende offen sind, welches letztere Ende mit einem Sammlerkasten verbunden ist, vom welchem ein Wasserauslass (5) für das gefilterete Wasser besteht.

2. Wasser-Filtereinlass nach Anspruch 1, dadurch gekennzeichnet, dass der Rahmen (2) mehrere gerade und parallele Dränagerohre (1) aufweist.

3. Wasser-Filtereinlass nach Anspruch 1, dadurch gekennzeichnet, dass der Rahmen (2) ein einzelnes, zu einer Helix aufgerolltes Dränagerohr aufweist.

4. Wasser-Filtereinlass nach Anspruch 1, dadurch gekennzeichnet, dass der Rahmen (2) eines oder mehrere Dränagerohre (1) aufweist, die zu Helices verschiedenen Durchmessers aufgerollt und konzentrisch ineinander agebracht sind.

5. Wasser-Filtereinlass nach Anspruch 1, dadurch gekennzeichnet, dass der Rahmen (2) eines oder mehrere parallele Dränagerohre (1) aufweist, um welche herum eines oder mehrere helixförmige Dränagerohre (1) angebracht sind.

6. Wasser-Filtereinlass nach Anspruch 1, dadurch gekennzeichnet, dass die Seiten des Rahmens (2) durch eine perforierte Bahn oder Platte abgegrenzt sind, und dass der Raum zwischen den Seitn des Rahmens (2) mit durchlässigem Material, bespielsweise Kies, gefüllt ist.

## Revendications

1. Agrégat de prise et de filtrage de l'eau usé surtout pour prendre les eaux pour l'aqui-culture et consistant en un porteur ou châssis garni de tuyaux de drainage perméables, caractérisé en ce qu'un ou plusieurs tuyaux de drainage (1) d'une longueur limitée sont montés dans un châssis (2) avec des boucles de transport (3) et en ce que les tuyaux de drainage sont fermés à un bout et ouverts à l'autre, le bout dernier nommé étant relié à une boîte collectrice (4), de laquelle il est une sortie d'eau (5) pour l'eau filtré.

2. Agrégat de prise et de filtrage de l'eau selon la revendication 1, caractérisé en ce que le châssis (2) comprend plusieurs tuyaux de drainage (1) droits et parallèles.

3. Agrégat de prise et de filtrage de l'eau selon la revendication 1, caractérisé en ce que le châssis (2) comprend un seul tuyau de drainage (1) enroulé en spirale.

4. Agrégat de prise et de filtrage de l'eau selon la revendication 1, caractérisé en ce que le châssis (2) comprend un ou plusieurs toyaux de drainage (1) enroulés en spirales de diamètres différents et montés concentriquement l'un dans l'autre.

5. Agrégat de prise et de filtrage de l'eau selon la revendication 1, caractérisé en ce que le châssis (2) comprend un ou plusieurs toyaux de drainage (1) parallèles autour desquels il est monté un ou plusieurs tuyaux de drainage en spirale (1).

6. Agrégat de prise et de filtrage de l'eau selon la revendication 1, caractérisé en ce que les côtés du châssis (2) sont délimités d'une tôle ou d'une plaque perforée, et en ce que l'espace entre les côtés du châssis (2) est rempli d'une matière perméable, du gravier par exemple.

FIG. 1

FIG. 2